Europäisches Patentamt

European Patent Office

Office européen des brevets

(11) Numéro de publication: **0 289 684 B1**

# FASCICULE DE BREVET EUROPEEN

(45) Date de publication de fascicule du brevet: **19.08.92**   (51) Int. Cl.⁵: **B65D 88/72**, B65G 53/20

(21) Numéro de dépôt: **87440024.5**

(22) Date de dépôt: **05.05.87**

(54) **Aéroglissière.**

(43) Date de publication de la demande:
**09.11.88 Bulletin 88/45**

(45) Mention de la délivrance du brevet:
**19.08.92 Bulletin 92/34**

(84) Etats contractants désignés:
**AT BE CH DE ES GB GR IT LI LU NL SE**

(56) Documents cités:
**DE-A- 1 903 030**
**FR-A- 2 116 375**

(73) Titulaire: **SARL AMANTISS**
**3 Avenue du Clos**
**F-59230 Saint Amand Les Eaux (Nord)(FR)**

(72) Inventeur: **Desrousseaux, Jean**
**874 Domaine de la Vigne**
**F-59910 Bondues(FR)**

(74) Mandataire: **Lepage, Jean-Pierre et al**
**Cabinet Lepage & Aubertin Innovations et**
**Prestations S.A. 23/25, rue Nicolas Leblanc**
**B.P. 1069**
**F-59011 Lille Cédex 1 (Nord)(FR)**

## Description

L'invention est relative à une toile d'aéroglissière. Elle trouvera tout particulièrement son application dans le domaine du transport pneumatique des matières pulvérulentes telles que plâtre, ciment et autres.

Le transport des matières pulvérulentes, par exemple entre un silo de stockage et des véhicules de transport, présente certaines difficultés en raison principalement de la nature semi-fluide de la masse des particules.

Parmi les dispositifs de transport existants, on connait les convoyeurs à bande sans fin assez bien adaptés pour ce type de produit mais qui cependant présentent certains inconvénients.

Notamment, ces convoyeurs mettent en mouvement de nombreuses pièces mécaniques telles que des rouleaux qui subissent l'action abrasive des matières pulvérulentes et qui par conséquent doivent faire l'objet d'un remplacement périodique.

Par ailleurs, les convoyeurs à bande sans fin présentent une longueur limitée, ce qui oblige à en disposer plusieurs en série lorsqu'il faut parcourir des distances importantes.

Un autre inconvénient est leur vitesse linéaire relativement faible d'où un débit modeste.

Le convoyeur à vis d'Archimède peut également être utilisé pour assurer le transport des matières pulvérulentes. Dans ces dispositifs, le nombre de pièces mécaniques en mouvement est plus limité que dans les convoyeurs à bande, ce qui en fait un engin plus robuste.

Son principal inconvénient est d'être peu souple d'utilisation et en particulier lorsqu'il faut faire parcourir à la matière un chemin sinueux, l'utilisation d'un convoyeur à vis d'Archimède doit être exclu car cela supposerait l'utilisation de nombreux sous-ensembles avec reprises intermédiaires.

C'est dans ce contexte que sont apparues les aéroglissières qui offrent les avantages de la souplesse et d'une infrastructure légère.

On connait les aéroglissières fermées et ouvertes, ces dernières étant plus particulièrement utilisées à l'intérieur des silos.

Le principe de fonctionnement des aéroglissières consiste à déplacer les particules de matières pulvérulentes à transporter en suspension dans un courant d'air. De la sorte, le matériau est véhiculé par le gaz en mouvement.

Il est toutefois nécessaire de lutter contre les forces de gravitation qui ont tendance à plaquer les particules de matières pulvérulentes contre le fond du couloir de circulation.

Dans ce but, on crée également un mouvement d'air ascendant au niveau de la partie inférieure de la masse de produits à transporter. Ce courant d'air ascendant soulève les particules et les dégage du fond du couloir de circulation. Les particules ne disposant alors plus d'aucune liaison avec le fond de la glissière, ne peuvent s'y accrocher et sont balayées par le mouvement d'air horizontal.

Pour créer précisément cette circulation ascendante d'air, l'aéroglissière présente un compartiment inférieur pressurisé dont la face supérieure est poreuse à l'air. Cette porosité autorise une fuite continue de l'air pressurisé réparti sur toute la surface de l'aéroglissière.

Le matériau poreux utilisé à cet égard est généralement une toile confectionnée dans un tissu synthétique tel que du polyester.

A cet égard, la présente invention concerne tous les types de matériaux poreux susceptibles d'être utilisés pour répartir ce mouvement ascendant d'air.

La toile d'aéroglissière doit présenter des caractéristiques de résistance et de porosité très précises. Son épaisseur varie généralement entre 4 et 5 mm pour une densité comprise entre 3 et 4 $kg/m^2$.

Sur le plan mécanique, la fixation des toiles d'aéroglissière est très importante car il est impératif que la toile soit parfaitement tendue sur toute sa longueur.

Cette fixation est assurée à l'aide de fers plats disposés de part et d'autre de l'aéroglissière, les fers plats étant percés au même pas que la toile, des boulons traversant les fers plats ainsi que la toile pour assurer le serrage des fers plats et le pincement de la toile prise en sandwich entre les fers plats boulonnés.

Lorsque le compartiment inférieur de l'aéroglissière n'est pas pressurisé, la matière pulvérulente repose directement sur la toile qui ainsi subit une tension horizontale très importante du fait du poids de la matière. Lorsque la toile est neuve, elle peut résister sans dommage à cette contrainte qui cependant provoque un effort qui a tendance à dégager la toile du pincement des fers de fixation et par suite diminuer l'étanchéité à ce niveau.

Par contre, lorsque la toile est quelque peu usagée, du fait de l'abrasion, elle diminue d'épaisseur et s'échappe du pincement. On assiste alors à une déchirure de celle-ci en raison de sa fixation ponctuelle au niveau des boulons et l'étanchéité du caisson n'est plus du tout efficace.

Toute déchirure met hors de fonctionnement l'aéroglissière qui se trouve alors bloquée. Lorsqu'il s'agit d'une aéroglissière placée dans le fond d'un silo, la déchirure de la toile empêche l'écoulement du produit et il est nécessaire de procéder à une vidange complète du silo pour effectuer la réparation. Il s'agit d'une opération extrêmement coûteuse qui cause un grave préjudice à cette technique de transport des matières pulvérulentes.

Cela étant, on connaît du document FR-A-2.116.375 un canal de transport pneumatique correspondant au préambule des revendications 1 et 2 et comportant un conduit de transport supérieur et un caisson à air inférieur, séparés par un plateau transporteur perméable à l'air. Le but de ce document est de renforcer l'étanchéïté entre les compartiments supérieur et inférieur et le plateau transporteur.

Pour ce, selon ce document, la fixation du plateau transporteur entre le conduit supérieur de transport et le caisson à air inférieur est réalisé par deux joints profilés en matière souple disposés tout le long du plateau, les joints étant fixés par des encoches sur le canal de transport.

Si cette réalisation apporte une solution au niveau de l'étanchéïté, il ne paraît pas que la fixation du plateau entre deux joints profilés en matière souple puisse empêcher la déformation du plateau transporteur en cas de bourrage du dispositif, c'est-à-dire lorsque la matière pulvérulente ne sera plus fluidifiée et reposera sur le plateau en engendrant des contraintes très importantes.

Par ailleurs, un tel système n'a pas d'application possible dans les aéroglissières ouvertes qui équipent les fonds de silos.

On connaît également du document allemand DE-A-1.903.030 un système de transport pneumatique vers une tuyauterie placée sous la mamelle d'une trémie.

Selon ce document, à la base d'une trémie, un fond poreux est installé, qui ménage au centre une chambre de transport du produit. De cette chambre, le produit est projeté dans la conduite de transport au moyen d'un injecteur d'air comprimé.

Plus précisément, le fond de la cuve est constitué par une toile poreuse en forme d'entonnoir fixée sur des rails de soutien, au niveau de son enveloppe, et pincée par un anneau de tension au niveau de son ouverture supérieure, un cordon étant prévu au niveau supérieur de l'anneau afin de positionner la dite ouverture de l'entonnoir.

Toutefois, en fonction des différences de structure de dispositif de transport et des différences de structure de la toile de fond, ce document ne suggère pas à l'homme du métier une solution au problème posé pour autoriser une bonne étanchéïté et une excellente résistance mécanique afin d'éviter les déchirures de la toile.

Le but principal de la présente invention est de présenter une toile d'aéroglissière particulièrement étudiée pour éviter toute déchirure accidentelle et pour renforcer l'étanchéïté du compartiment inférieur de l'aéroglissière.

Il s'agit d'un progrès considérable notamment en ce qui concerne la sûreté du fonctionnement. Les frais de fonctionnement peuvent être diminués notamment grâce à une réduction de l'entretien et du nombre de visites de contrôle de l'aéroglissière.

Sur le plan économique, l'amélioration des caractéristiques de la toile d'aéroglissière est obtenue selon la présente invention avec une augmentation minime des coûts de fabrication.

Un autre but de la présente invention est de présenter une toile d'aéroglissière qui puisse être mise en place sur les installations existantes sans modification de leur dispositif de fixation. Cette caractéristique est particulièrement appréciable car elle permet un développement très rapide du produit sans exiger de transformations des aéroglissières.

D'autres buts et avantages de la présente invention apparaîtront au cours de la description qui va suivre qui n'est cependant donnée qu'à titre indicatif.

Selon un mode de réalisation de l'invention, le dispositif de fluidification et de transport pneumatique de matière pulvérulente, appelé "aéroglissière ouverte", dans lequel la matière pulvérulente est soumise à un gaz en mouvement, le dit dispositif comprenant au moins:

- un compartiment inférieur pressurisé, présentant au moins des parois latérales fermées, définissant une face supérieure ouverte,
- une toile poreuse à l'air présentant au moins deux lisières,
- des moyens continus de fixation latérale de la dite toile, la maintenant transversalement sur la dite face supérieure du compartiment inférieur et se présentant d'une part sous la forme de fers de pincement au niveau des dites lisières de la toile sur les dites parois latérales du compartiment inférieur, et d'autre part sous la forme d'un bourrelet latéral, prévu de chaque côté de la toile le long des dites lisières, prenant appui à l'extérieur du dit compartiment au niveau de la zone de pincement,
- la dite toile fermant le dit compartiment inférieur et constituant en outre substantiellement une interface entre le dit compartiment inférieur et le dit matériau pulvérulent,

est caractérisé par le fait que la dite toile est pincée entre les dits fers de fixation et est retenue par l'intermédiaire des dits bourrelets s'appuyant extérieurement sur les dits fers, ces derniers s'étendant en équerre et étant appliqués l'un vers l'autre, pour pincer la toile, par l'intermédiaire d'un cadre de serrage, en serrant le compartiment inférieur, la toile, et les fers extérieurement.

Dans une variante du dispositif de la présente invention, qui dans ce cas est du type "aéroglissière fermée", le dispositif comprenant en outre un couloir supérieur de transport de la matière pulvérulente présentant au moins des parois latérales définissant une face inférieure ouverte, la dite face supérieure du compartiment inférieur et la dite face inférieure du couloir supérieur étant placées en vis-à-vis, est caractérisé par le fait que la dite toile (5) est pincée entre les dits fers de fixation (7, 8) et est retenue par l'intermédiaire des dits bourrelets (12) s'appuyant extérieurement sur les dits fers (7, 8), ces derniers s'étendant en équerre au niveau des dites parois latérales du couloir supérieur (2) et du compartiment inférieur (4), et étant appliqués l'un vers l'autre, pinçant la dite toile (5), par l'intermédiaire de boulons de serrage, traversant de part en part les fers et la toile.

L'invention sera mieux comprise à la lecture de la description suivante accompagnée de dessins en annexe parmi lesquels:

- la figure 1 schématise une vue en coupe axiale d'une aéroglissière,
- la figure 2 représente un mode de fixation connu de la toile,
- la figure 3 représente en vue de dessus les déformations rencontrées au niveau des toiles d'aéroglissière avec leur mode de fixation actuel,
- la figure 4 représente en vue de détail, la réalisation des moyens continus de fixation latérale de la toile selon la présente invention,
- la figure 5 schématise en vue de coupe sectionnelle, la fixation d'un jonc latéral sur la toile d'aéroglissière selon un mode préférentiel de réalisation de la présente invention,
- la figure 6 schématise une aéroglissière ouverte avec un dispositif de fixation de la toile par pincement uniquement.

La présente invention vise une toile d'aéroglissière destinée notamment à assurer le transport pneumatique de matières pulvérulentes telles que plâtre, ciment et autres.

Par toile, il faut entendre tout matériau poreux qui est susceptible d'être traversé par un courant d'air et qui forme un support pour les particules de matières pulvérulentes.

Parmi les différentes techniques de transport de matériaux pulvérulents, certainement les moyens pneumatiques représentent la technique la plus souple de mise en oeuvre.

L'utilisation des aéroglissières s'est largement développée, le point délicat étant la fixation de la toile et l'étanchéité à ce niveau comme cela ressort de la description suivante.

Il existe deux types d'aéroglissières, ouvertes ou fermées, qui se distinguent selon qu'il est utilisé ou pas, un couloir de guidage des matières pulvérulentes.

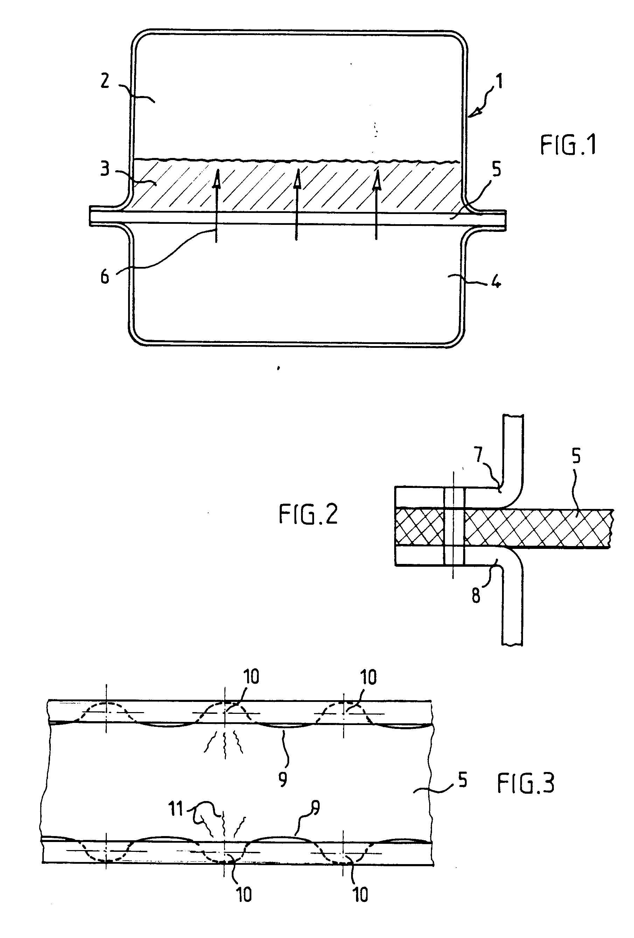

La figure 1 représente une vue de principe d'une aéroglissière 1 de type fermé.

L'aéroglissière 1 comprend un couloir de transport 2 dans lequel se trouve la matière 3 à véhiculer. Elle comprend également un compartiment inférieur 4 pressurisé.

Une toile 5 poreuse à l'air sert d'interface entre le compartiment pressurisé 4 et le couloir de transport 2.

En raison de la différence de presssion régnant dans le compartiment 4 et le couloir 2, il se produit un courant d'air ascendant schématisé par les flèches 6 sur la figure 1.

Ce courant d'air ascendant parcourt la matière pulvérulente 3 qui se trouve en quelque sorte fluidisée. En effet, les forces de gravitation qui avaient tendance à plaquer les particules de matières 3 sur la toile 5 sont contrebalancées par les forces aérodynamiques du mouvement d'air ascendant. En dosant judicieusement la pression de l'air dans le compartiment 4 et la porosité de la toile 5, il est possible de placer la matière pulvérulente 3 dans un état de suspension qui rend son déplacement horizontal très facile par un mouvement correspondant de l'air.

Actuellement, les toiles d'aéroglissières sont confectionnées dans un tissu de polyester d'une épaisseur d'environ 4 à 5 mm avec une densité comprise entre 3 et 4 kg/m$^2$. Les détails de fixation de la toile 5 sur les parois latérales de l'aéroglissière 1 sont illustrés à la figure 2.

La toile 5 est actuellement fixée par pincement entre des fers 7 et 8 avec mise en place d'un boulon de serrage non illustré qui traverse les fers 7 et 8 ainsi que la toile 5. Les boulons de serrage sont répartis régulièrement le long de l'aéroglissière ce qui permet d'obtenir la fixation de la toile 5 par simple pincement entre les boulons. De cette fixation dépend l'étanchéité entre la toile 5 et le compartiment pressurisé 4.

Malheureusement, au fil du temps, sous l'action abrasive des matériaux pulvérulents, on assiste à une diminution de l'épaisseur de la toile et une diminution correspondante de l'effort de pincement des fers 7 et 8 entre les boulons de serrage par effet du poids de la matière.

Lorsque le compartiment inférieur 4 de l'aéroglissière 1 est dépressurisé, ne serait-ce que par incident, bourrage par exemple, le poids de la matière pulvérulente repose intégralement sur la toile 5 qui subit ainsi une forte contrainte de tension transversale.

Cette contrainte de traction se répartit longitudinalement sur les fers de fixation 7 et 8, et au cas où le pincement de la toile n'est plus suffisamment énergique, il s'en suit une distension 9 de celle-ci entre les boulons 10 de fixation, telle qu'illustrée à la figure 3.

La toile 5 s'échappe du pincement entre les boulons 10 et le fonctionnement de l'aéroglissière devient défectueux car il se produit des fuites d'air depuis le compartiment inférieur 4 par la distension 9 dans le couloir de transport 2. Le compartiment 4 ne peut dans ces conditions plus être pressurisé et il est nécessaire de procéder à une réparation de l'installation, c'est-à-dire le remplacement de la toile 5 après vidange du dispositif de transport pneumatique.

On assiste également à un second phénomène lié à la distension 9 de la toile 5, il s'agit de déchirures 11 schématisées à la figure 3, qui ont lieu au niveau de la fixation de la toile 5 par les boulons 10 en raison précisément de la contrainte locale très importante exercée par la présence du boulon 10 sur la toile 5. La toile 5 n'est en effet fixée sur les parois latérales de l'aéroglissière que ponctuellement par les boulons 10, ce qui se traduit par des déchirures 11.

Selon la caractéristique principale de la présente invention, la toile d'aéroglissière 5 présente des moyens continus de fixation latérale. Ces moyens continus sont efficaces même lorsque la toile d'aéroglissière présente une épaisseur réduite en raison de son usure par les matériaux pulvérulents abrasifs.

Les moyens continus de fixation autorisent une répartition linéaire de la charge et évitent tout dégagement latéral de la toile du dispositif de fixation, ce qui autorise une meilleure étanchéité au niveau de la fixation toile-compartiment pressurisé.

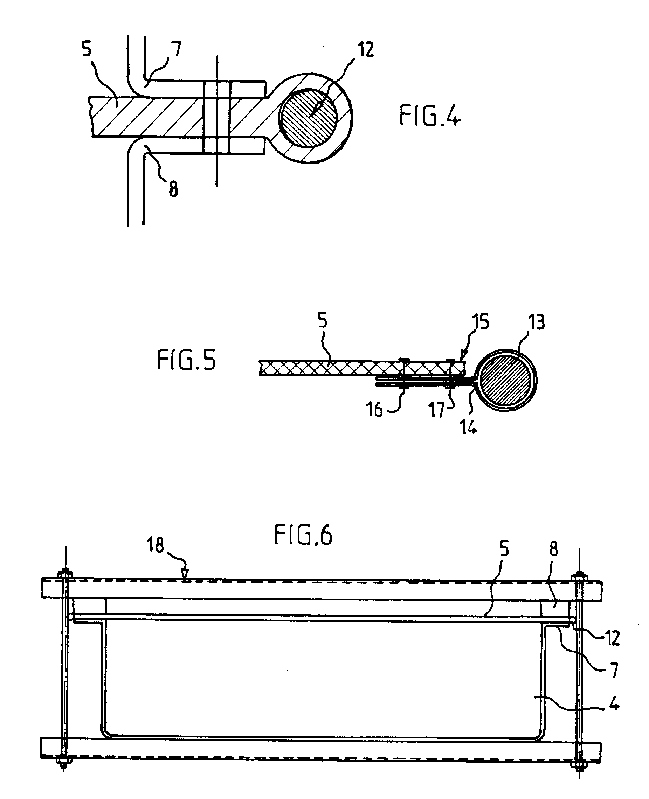

Selon un mode préférentiel de réalisation de l'invention, les moyens continus de fixation latérale se présentent sous la forme d'un bourrelet 12, tel qu'illustré à la figure 4, fixé le long de lisières de la toile 5 à l'extérieur de la zone de pincement entre les fers 7 et 8. On peut noter dans ce cas que la retenue mécanique de la toile 5 n'est plus effectuée par pincement mais plutôt par blocage de la lisière à l'extérieur de fers de fixation 7 et 8. Même en cas de desserrage accidentel des fers 7 et 8, l'extrémité latérale de la toile 5 ne peut s'échapper.

En ce qui concerne le mode de réalisation du bourrelet 12, la présente invention préconise la mise en place d'un jonc 13 fixé le long de la lisière de la toile 5 telle qu'illustrée à la figure 5. Plus particulièrement, le jonc 13 est enveloppé dans une sangle 14 cousue le long de la lisère 15 de la toile 5.

Pour obtenir une meilleure résistance, la sangle 14 est fixée par une double couture 16 et 17 sur la toile 5. De préférence, la sangle 14 est cousue sur elle-même le long de la face inférieure de la toile 5.

Il est important que le jonc 13 ne puisse pas subir d'allongements ni de déformations. De bons résultats ont été obtenus en utilisant un jonc confectionné en polyester. Ce matériau permet d'obtenir un jonc résistant mais présentant une souplesse suffisante pour que la toile s'adapte aux déformations sur son trajet.

Dans l'exemple choisi, la fixation et le serrage de lisières de la toile 5 font appel à des boulons traversant de part en part les fers et la toile 5. La figure 6 illustre une nouvelle solution de fixation de la toile 5 entre les fers 7 et 8 sans pour cela utiliser de boulons de serrage.

Selon cette conception, on utilise un cadre 18 extérieur de serrage qui applique les fers 7 et 8, disposés de part et d'autre de la toile 5 l'un contre l'autre pour réaliser le pincement de la dite toile 5. Le bourrelet 12 fixé sur la lisière de la toile 5 évite que celle-ci puisse s'échapper du pincement.

Cette disposition est préférentielle dans les aéroglissières de type ouverte étant donné qu'elle permet d'éliminer le pinçage du boulon de serrage qui crée malgré tout une zone de faiblesse dans la toile.

D'autres mises en oeuvre de la présente invention, à la portée de l'Homme de l'Art, auraient également pu être envisagées sans pour autant sortir du cadre de celle-citel que défini dans les revendications.

**Revendications**

1. Dispositif de fluidification et de transport pneumatique de matière pulvérulente, appelé "aéroglissière ouverte", dans lequel la matière pulvérulente est soumise à un gaz en mouvement, le dit dispositif comprenant au moins:
   - un compartiment inférieur (4) pressurisé, présentant au moins des parois latérales fermées, définissant une face supérieure ouverte,
   - une toile (5) poreuse à l'air présentant au moins deux lisières,
   - des moyens continus de fixation latérale de la dite toile, la maintenant transversalement sur la dite face supérieure du compartiment inférieur (4) et se présentant d'une part sous la forme de fers de pincement (7, 8) au niveau des dites lisières de la toile (5) sur les dites parois latérales du compartiment inférieur (4), et d'autre part sous la forme d'un bourrelet latéral (12), prévu de chaque côté de la toile (5) le long des dites lisières, prenant appui à l'extérieur du dit compartiment (4) au niveau de la zone de pincement,
   - la dite toile fermant le dit compartiment inférieur (4) et constituant en outre substantiellement une interface entre le dit compartiment inférieur et le dit matériau pulvérulent,
   caractérisé par le fait que la dite toile (5) est pincée entre les dits fers de fixation (7, 8) et est retenue par l'intermédiaire des dits bourrelets (12) s'appuyant extérieurement sur les dits fers (7, 8), ces derniers s'étendant en équerre et étant appliqués l'un vers l'autre, pour pincer la toile (5), par l'intermédiaire d'un cadre (18) de serrage, en serrant le compartiment inférieur (4), la toile (5), et les fers (7, 8) extérieurement.

2. Dispositif de fluidification et de transport pneumatique de matière pulvérulente, appelé "aéroglissière fermée", dans lequel la matière pulvérulente est soumise à un gaz en mouvement, le dit dispositif comprenant au moins:
    - un compartiment inférieur (4) pressurisé, présentant au moins des parois latérales fermées, définissant une face supérieure ouverte,
    - un couloir supérieur (2) de transport de la matière pulvérulente présentant au moins des parois latérales définissant une face inférieure ouverte,
    - la dite face supérieure du compartiment inférieur et la dite face inférieure du couloir supérieur étant placées en vis-à-vis,
    - une toile (5) poreuse à l'air présentant au moins deux lisières,
    - des moyens continus de fixation latérale de la dite toile, la maintenant transversalement sur la dite face supérieure du compartiment inférieur (4), et se présentant d'une part sous la forme de fers de pincement (7, 8) au niveau des dites lisières de la toile (5) sur les dites parois latérales du compartiment inférieur (4) et du couloir supérieur (2) et d'autre part sous la forme d'un bourrelet latéral (12) prévu de chaque côté de la toile (5) le long des dites lisières, prenant appui à l'extérieur du dit compartiment (4) au niveau de la zone de pincement,
    - la dite toile (5) étant placée étendue entre les dites faces inférieure et supérieure en vis-à-vis pour constituer substantiellement une interface entre le dit compartiment inférieur et le dit matériau pulvérulent, et pour fermer respectivement le compartiment inférieur (4) et le couloir supérieur (2),
    caractérisé par le fait que la dite toile (5) est pincée entre les dits fers de fixation (7, 8) et est retenue par l'intermédiaire des dits bourrelets (12) s'appuyant extérieurement sur les dits fers (7, 8), ces derniers s'étendant en équerre au niveau des dites parois latérales du couloir supérieur (2) et du compartiment inférieur (4), et étant appliqués l'un vers l'autre, pinçant la dite toile (5), par l'intermédiaire de boulons de serrage, traversant de part en part les fers et la toile.

3. Toile, selon la revendication 1 ou 2, caractérisée par le fait que le bourrelet latéral (12) se présente sus la forme d'un jonc (13).

4. Toile, selon la revendication 3, caractérisée par le fait que les joncs latéraux (13) sont enveloppés dans une sangle (14) cousue le long de la lisière (15) de la toile (5).

5. Toile, sleon la revendication 4, caractérisée par le fait que la sangle (14) est fixée par une double ligne de couture (16, 17) à la toile (5).

6. Toile, selon la revendication 4, caractérisée par le fait que la sangle est cousue sur elle-même sur la face inférieure de la toile (5).

7. Toile, selon la revendication 5, caractérisée par le fait que le jonc est confectionné en polyester.

**Claims**

1. Device for fluidifying and pneumatically transporting material in powder form, known as an "open aeroslide", wherein the material in powder form is subjected to a gas in movement, the said device comprising at least:
    - a pressurized lower compartment (4) having at least closed lateral walls, defining an open upper face,
    - a fabric (5) porous to air having at least two borders,
    - continuous means for laterally fixing the said fabric, holding it transversely on the said upper face of the lower compartment (4) and taking, on one hand, the form of pinching members (7, 8) in the area of the said borders of the fabric (5) on the said lateral walls of the lower compartment (4), and, on the other hand, the form of a lateral bead (12), provided on either side of the fabric (5) along the said borders, bearing on the outside of the said compartment (4) in the area of the pinching zone,
    - the said fabric closing the said lower compartment (4) and futher substantially constituting an interface between the said lower compartment and the said material in powder form,
    characterized by the fact that the said fabric (5) is pinched between the said fixing members (7,8) and is retained via the said beads (12) bearing externally on the said members (7, 8), the latter extending like angle irons and being pressed towards one another, to pinch the fabric (5), via a clamping frame (18), clamping the lower compartment (4), the fabric (5) and the members (7, 8) externally.

2. Device for fluidifying and pneumatically transporting material in powder form, known as an "closed aeroslide", wherein the material in powder form is subjected to a gas in movement, the said device comprising at least:
   - a pressurized lower compartment (4) having at least closed lateral walls, defining an open upper face,
   - an upper corridor (2) for transporting the material in powder form, having at least lateral walls defining an open lower face,
   - the said upper face of the lower compartment and the said lower face of the upper corridor being placed opposite one another,
   - a fabric (5) porous to air having at least two borders,
   - continuous means for laterally fixing the said fabric, holding it transversely on the said upper face of the lower compartment (4) and taking, on one hand, the form of pinching members in the area of the said borders of the fabric (5) on the said lateral walls of the lower compartment (4) and the upper corridor (2), and, on the other hand, the form of a lateral bead (12), provided on either side of the fabric (5) along the said borders, bearing on the outside of the said compartment (4) in the area of the pinching zone,
   - the said fabric (5) being placed stretched between the said lower and upper faces opposite one another to constitute substantially an interface between the said lower compartment and the said material in powder form, and to close respectively the lower compartment (4) and the upper corridor (2),

   characterized by the fact that the said fabric (5) is pinched between the said fixing members (7, 8) and is retained via the said beads (12) bearing externally upon the said members (7, 8), the latter extending like angle irons in the area of the said lateral walls of the upper corridor (2) and of the lower compartment (4), and being pressed towards one another, pinching the said fabric (5), via clamping bolts, passing right through the members and the fabric.

3. Fabric according to claim 1 or 2, characterized by the fact that the lateral bead (12) takes the form of a rod (13).

4. Fabric according to claim 3, characterized by the fact that the lateral rods (13) are enveloped in a strip (14) sewn along the border (15) of the fabric (5).

5. Fabric according to claim 4, characterized by the fact that the strip (14) is secured to the fabric (5) by a double seam (16, 17).

6. Fabric according to claim 4, characterized by the fact that the strip is sewn back onto itself on the lower face of the fabric (5).

7. Fabric according to claim 5, characterized by the fact that the rod is made of polyester.

**Patentansprüche**

1. Vorrichtung zur Verflüchtigung und pneumatischen Beförderung von pulverigem Material, die "offene Luftgleitbahn" genannt wird, in der das pulverige Material einem fortbewegenden Gas ausgesetzt wird, wobei die genannte Vorrichtung mindestens umfaßt:
   - ein unter Druck stehendes unteres Fach (4), das mindestens geschlossene Seitenwände aufweist, die eine offene Oberseite definieren,
   - ein luftdurchlässiges Tuch (5), das mindestens zwei Säume aufweist,
   - ununterbrochene Mittel zur seitlichen Befestigung des genannten Tuchs, die es quer über der genannten Oberseite des unteren Fachs (4) halten und, einerseits, als Klemmzangen (7, 8) im Bereich der genannten Säume des Tuchs (5) an den genannten Seitenwänden des unteren Fachs (4) und, andererseits, als eine beiderseits des Tuchs (5) an den genannten Säumen entlang vorgesehene Seitenwulst (12), die außen an das genannte Fach (4) im Bereich der Klemmzone anlehnt, ausgestaltet sind,

   wobei das genannte Tuch das genannte untere Fach (4) schließt und außerdem im wesentlichen eine Zwischenfläche zwischen dem genannten unteren Fach und dem genannten pulverigen Material bildet,

   dadurch gekennzeichnet, daß das genannte Tuch (5) zwischen den genannten Befestigungszangen (7, 8) geklemmt und mittels der genannnten Wülste (12), die außen an die genannten Zangen (7, 8) anlehnen, festgehalten wird, wobei sich diese letzten rechtwinklig erstrecken und mittels eines Rahmens zu einander hin gedrückt werden, um das Tuch (5) dadurch zu klemmen, daß das untere Fach (4), das Tuch (5) und die Zangen (7, 8) von außen aus gespannt werden.

2. Vorrichtung zur Verflüchtigung und pneumatischen Beförderung von pulverigem Material, die "geschlossene Luftgleitbahn" genannt wird, in der das pulverige Material einem fortbewegenden Gas ausgesetzt wird, wobei die genannte Vorrichtung mindestens umfaßt:

- ein unter Druck stehendes unteres Fach (4), das mindestens geschlossene Seitenwände aufweist, die eine offene Oberseite definieren,
- einen oberen Durchgang (2) zur Beförderung des pulverigen Materials, die mindestens Seitenwände aufweist, die eine offene Unterseite definieren,
- wobei die genannte Oberseite des unteren Fachs und die genannte Unterseite des oberen Durchgangs einander zugewandt angeordnet sind,
- ein luftdurchlässiges Tuch (5), das mindestens zwei Säume aufweist,
- ununterbrochene Mittel zur seitlichen Befestigung des genannten Tuchs, die es quer über der genannten Oberseite des unteren Fachs (4) halten und, einerseits, als Klemmzangen (7, 8) im Bereich der genannten Säume des Tuchs (5) an den genannten Seitenwänden des unteren Fachs (4) und des oberen Durchgangs (2) und, andererseits, als eine beiderseits des Tuchs (5) an den genannten Säumen entlang vorgesehene Seitenwulst (12), die außen an das genannte Fach (4) im Bereich der Klemmzone anlehnt, ausgestaltet sind,

wobei das genannte Tuch (5) zwischen den genannten gegenüberliegenden unteren und oberen Seiten gestreckt angeordnet ist, um in wesentlichen eine Zwischenfläche zwischen dem genannten unteren Fach und dem genannten pulverigen Material zu bilden und respektive das untere Fach (4) und den oberen Durchgang (2) zu schließen,

dadurch gekennzeichnet, daß das genannte Tuch (5) zwischen den genannten Befestigungszangen (7, 8) geklemmt und mittels der genannnten Wülste (12), die außen an die genannten Zangen (7, 8) anlehnen, festgehalten wird, wobei sich diese letzten im Bereich der genannten Seitenwände des oberen Durchgangs (2) und des unteren Fachs (4) rechtwinklig erstrecken und mittels die Zangen und das Tuch durchquerender Spannbolzen zu einander hin gedrückt werden, wobei das genannte Tuch (5) geklemmt wird.

3. Tuch nach Anspruch 1 oder 2, dadurch gekennzeichnet, daß die Seitenwulst (12) als ein Rohr (13) ausgestaltet ist.

4. Tuch nach Anspruch 3, dadurch gekennzeichnet, daß die Seitenröhre (13) in einem dem Saum (15) des Tuchs (5) entlang genähten Gurt (14) eingehüllt sind.

5. Tuch nach Anspruch 4, dadurch gekennzeichnet, daß der Gurt (14) mittels einer doppelten Naht (16, 17) am Tuch (5) befestigt ist.

6. Tuch nach Anspruch 4, dadurch gekennzeichnet, daß der Gurt auf sichselbst umgefaltet an der Unterseite des Tuchs genäht ist.

7. Tuch nach Anspruch 6, dadurch gekennzeichnet, daß das Rohr aus Polyester hergestellt ist.

FIG.1

FIG.2

FIG.3

FIG.4

FIG.5

FIG.6